(19) Europäisches Patentamt
European Patent Office
Office européen des brevets

(11) **EP 1 943 557 B1**

(12) **EUROPÄISCHE PATENTSCHRIFT**

(45) Veröffentlichungstag und Bekanntmachung des Hinweises auf die Patenterteilung:
**10.04.2013 Patentblatt 2013/15**

(21) Anmeldenummer: **06806582.0**

(22) Anmeldetag: **27.10.2006**

(51) Int Cl.:
**G02B 27/09** (2006.01)   **G02B 3/00** (2006.01)

(86) Internationale Anmeldenummer:
**PCT/EP2006/010366**

(87) Internationale Veröffentlichungsnummer:
**WO 2007/048622 (03.05.2007 Gazette 2007/18)**

(54) **VORRICHTUNG ZUR HOMOGENISIERUNG VON LICHT**

DEVICE FOR HOMOGENIZING LIGHT

DISPOSITIF D HOMOGÉNÉISATION DE LUMIÈRE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.10.2005 DE 102005051749**

(43) Veröffentlichungstag der Anmeldung:
**16.07.2008 Patentblatt 2008/29**

(73) Patentinhaber: **LIMO Patentverwaltung GmbH & Co. KG**
**44319 Dortmund (DE)**

(72) Erfinder:
• **LISSOTSCHENKO, Vitalij**
**58730 Fröndenberg (DE)**
• **MIKHAILOV, Aleksei**
**Sankt Petersburg, 197110 (RU)**

• **DARSHT, Maxim**
**44319 Dortmund (DE)**
• **MIKLIAEV, Iouri**
**Cheljabinsk, 454025 (RU)**

(74) Vertreter: **Basfeld, Rainer et al**
**Fritz Patent- und Rechtsanwälte**
**Postfach 1580**
**59705 Arnsberg (DE)**

(56) Entgegenhaltungen:
**EP-A- 1 489 438    WO-A- 03/016963**
**US-A- 4 420 221    US-A1- 2004 130 790**
**US-B1- 6 239 913**

• **PATENT ABSTRACTS OF JAPAN Bd. 1999, Nr. 05, 31. Mai 1999 (1999-05-31) -& JP 11 038203 A (TOPPAN PRINTING CO LTD), 12. Februar 1999 (1999-02-12)**

EP 1 943 557 B1

**Beschreibung**

Die vorliegende Erfindung betrifft eine Vorrichtung zur Homogenisierung von Licht gemäß dem Oberbegriff des Anspruchs 1.

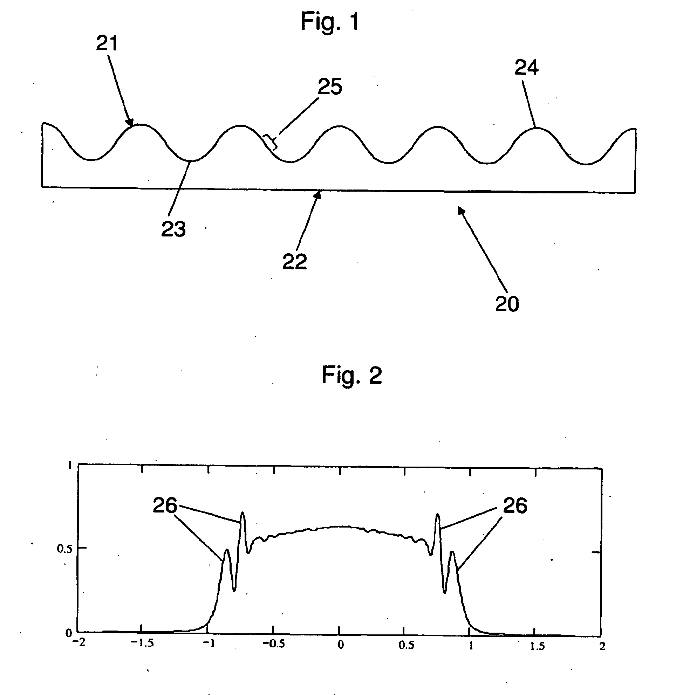

Fig. 1 zeigt schematisch eine aus dem Stand der Technik bekannte (siehe beispielsweise US 6,239,913 B1) Vorrichtung zur Homogenisierung von Licht, die aus einem transparenten Substrat 20 mit einer mit Linsen versehenen optisch funktionalen Fläche 21 und einer dieser gegenüberliegenden planen Fläche 22 besteht. Auf der optisch funktionalen Fläche 21 sind abwechselnd konkave und konvexe Zylinderlinsen 23, 24 angeordnet. Aufgrund von Interferenzeffekten von Lichtstrahlen, die durch die Übergänge 25 zwischen den konkaven und den konvexen Zylinderlinsen 23, 24 beziehungsweise durch zu diesen Übergängen 25 benachbarte Bereiche hindurch getreten sind, ergibt sich eine Intensitätsverteilung wie in Fig. 2 abgebildet. Diese weist am Rand Intensitätsspitzen 26 auf, die bei manchen Anwendungen nicht hinnehmbar sind.

Aus der europäischen Patentanmeldung EP 1 489 438 A ist eine Vorrichtung der eingangs genannten Art bekannt. Bei der darin beschriebenen Vorrichtung sind zwei Substrate hintereinander in Ausbreitungsrichtung des zu homogenisierenden Lichts angeordnet. Beide Substrate weisen eine optisch funktionale Fläche mit abwechselnd nebeneinander angeordneten konkaven und konvexen Zylinderlinsen auf. Auf dem ersten Substrat sind mindestens zwei Gruppen von konvexen Zylinderlinsen vorgesehen, wobei die konvexen Zylinderlinsen der ersten Gruppe breiter sind als die konvexen Zylinderlinsen der zweiten Gruppe. Die dazwischen angeordneten konkaven Zylinderlinsen sind sämtlich gleich breit. Auf dem zweiten Substrat sind einerseits sämtliche konvexen Zylinderlinsen gleich breit und andererseits sämtliche konkaven Zylinderlinsen gleich breit. Durch diese Gestaltung wird erreicht, dass die Scheitellinien der konkaven Zylinderlinsen des ersten Substrats gegenüber den Scheiteillinien der konkaven Zylinderlinsen des zweiten Substrats verschoben sind. Insbesondere kann diese Verschiebung für unterschiedliche konkave Zylinderlinsen unterschiedlich groß sein. Dies bewirkt, dass durch eine konkave Zylinderlinse des ersten Substrats hindurch getretenes Licht zumindest teilweise nicht durch eine konkave Zylinderlinse des zweiten Substrats hindurch tritt. Weiterhin tritt durch zwei unterschiedliche konkave Zylinderlinsen des ersten Substrats hindurch getretenes Licht zumindest teilweise nicht durch zueinander äquivalente Bereiche des zweiten Substrates hindurch. Auf diese Weise kann erreicht werden, dass durch gleiche Bereiche unterschiedlicher konkaver Zylinderlinsen des ersten Substrats hindurch getretenes Licht in einer Arbeitsebene nicht an gleichen Orten auftrifft. Durch eine derartige Gestaltung können unter Umständen Intensitätsspitzen im Randbereich einer Arbeitsebene verkleinert werden.

Das der vorliegenden Erfindung zugrunde liegende Problem ist die Schaffung einer Vorrichung der eingangs genannten Art, die eine gleichmäßigere Intensitätsverteilung des homogenisierten Lichts erzielen kann.

Dies wird erfindungsgemäß durch eine Vorrichtung der eingangs genannten Art mit den kennzeichnenden Merkmalen des Anspruchs 1 erreicht. Die Unteransprüche betreffen bevorzugte Weiterbildungen der Erfindung.

Durch den erfindungsgemäß erzeugten definierten optischen Gangunterschied zwischen Teilstrahlen, die durch unterschiedliche Übergänge hindurch treten, kann gezielt das Licht, das durch die Übergänge hindurch tritt, so überlagert werden, dass es zu der Intensitätsverteilung nicht mehr oder in geringerem Umfang beiträgt. Damit können aber unerwünschte Interferenzeffekte gemäß dem Stand der Technik weitgehend vermieden werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen

Fig. 1    eine schematische Ansicht einer Vorrichtung zur Homogenisierung von Licht gemäß dem Stand der Technik;

Fig. 2    eine mit einer Vorrichtung gemäß Fig. 1 erzeugte Intensitätsverteilung (Intensität in willkürlichen Einheiten gegen Winkel in Grad);

Fig. 3    eine schematische Ansicht einer erfindungsgemäßen Vorrichtung zur Homogenisierung von Licht;

Fig. 4a    eine schematische, stark übertrieben dargestellte Ansicht gemäß dem Pfeil IVa in Fig. 3;

Fig. 4b    eine schematische, stark übertrieben dargestellte Ansicht gemäß dem Pfeil IVb in Fig. 3;

Fig. 5    eine mit einer Vorrichtung gemäß Fig. 3 erzeugte Intensitätsverteilung (Intensität in willkürlichen Einheiten gegen Winkel in Grad);

Fig 6    eine mit einer ersten Gruppe (a) von ersten Übergängen und anschließenden Zylinderlinsen der Vorrichtung gemäß Fig. 3 erzeugte Intensitätsverteilung (Intensität in willkürlichen Einheiten gegen Winkel in Grad);

Fig. 7    eine mit einer zweiten Gruppe (b) von zweiten Übergängen und anschließenden Zylinderlinsen der Vorrichtung gemäß Fig. 3 erzeugte Intensitätsverteilung (Intensität in willkürlichen Einheiten gegen Winkel in Grad);

Fig. 8    die Überlagerung der Intensitätsverteilungen gemäß Fig. 6 und Fig. 7 (Intensität in willkürlichen Einheiten gegen Winkel in Grad);

Fig. 9    eine schematische Ansicht einer optisch funktionalen Fläche einer weiteren Ausführungsform einer erfindungsgemäßen Vorrichtung.

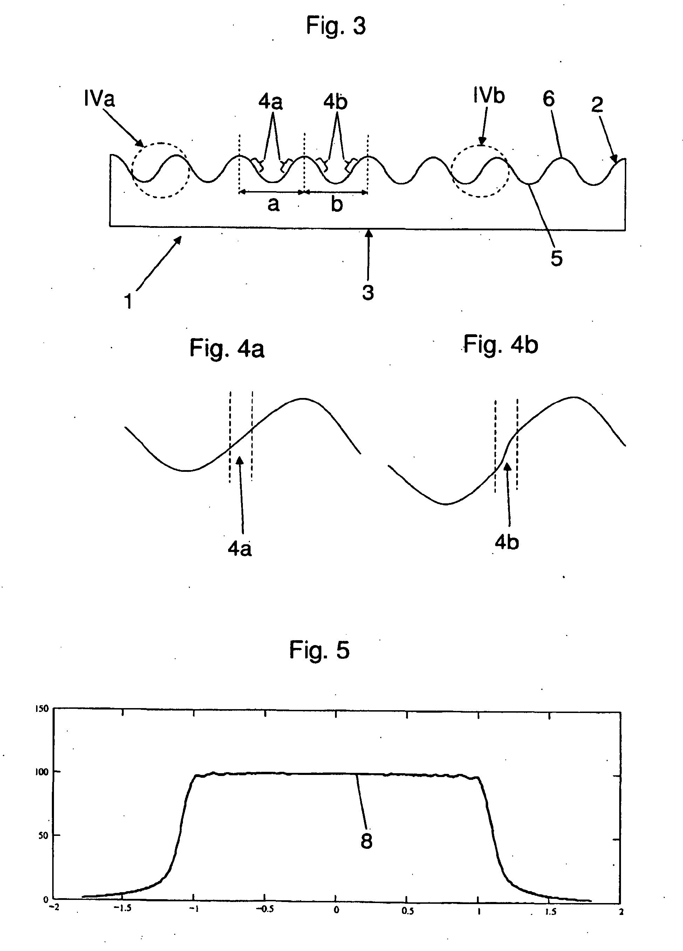

Die abgebildete Ausführungsform einer erfindungsgemäßen Vorrichtung kann ein Substrat 1 mit einer optisch funktionalen Fläche 2 umfassen, die ein Array von Linsen aufweist. Auf der gegenüberliegenden Seite des Substrates 1 ist bei der abgebildeten Ausführungsform eine plane Fläche 3 vorgesehen. Auf der optisch funktionalen Fläche 2 sind abwechselnd konkave und konvexe Zylinderlinsen 5, 6 angeordnet. Bei der Vorrichtung gemäß Fig. 3 sind die Übergänge 4a, 4b zwischen den konkaven und den konvexen Zylinderlinsen 5, 6 so gestaltet, dass Interferenzeffekte verringert werden. Beispielsweise können die Übergänge 4b eine größere Steilheit und/oder eine größere Ausdehnung in Ausbreitungsrichtung des zu homogenisierenden Lichts als die Übergänge 4a beziehungsweise die aus dem Stand der Technik bekannten Übergänge 25 (siehe Fig. 1) aufweisen.

Es besteht durchaus die Möglichkeit, dass sowohl die Übergänge 4a als auch die Übergänge 4b eine Abweichung von einem glatten sinusähnlichen Übergang aufweisen. Bei den Übergängen 4b ist die Abweichung von einem sinusähnlichen Übergang jedoch größer als bei den Übergängen 4a.

Es besteht durchaus die Möglichkeit, mehr als eine optisch funktionale Fläche vorzusehen. Beispielsweise könnte auf der Rückseite des Substrates 1, das auf seiner Vorderseite die optisch funktionale Fläche 2 aufweist, eine optisch funktionale Fläche mit konkaven und konvexen Zylinderlinsen angeordnet sein, deren Zylinderachsen senkrecht zu den Zylinderachsen der auf der Vorderseite angeordneten Zylinderlinsen ausgerichtet sind. Dadurch trägt dieses Substrat zur Homogenisierung in zwei zueinander senkrechten Richtungen bei. Weiterhin besteht die Möglichkeit, zwei oder mehr Substrate mit jeweils einer oder zwei optisch funktionalen Flächen, die der gemäß Fig. 3 entsprechen, hintereinander anzuordnen, um den Homogenisierungseffekt zu vergrößern.

Fig. 3 zeigt, dass es zwei unterschiedlich Gruppen a, b von Abschnitten der optisch funktionalen Fläche 2 gibt, die abwechselnd auf der Fläche 2 angeordnet sind. Jedes Element dieser Gruppen a, b umfasst zwei Übergänge 4a, 4b zwischen konkaven und konvexen Zylinderlinderlinsen 5, 6 sowie eine konkave Zylinderlinse 5 und zwei halbe konvexe Zylinderlinsen 6. Beispielsweise können die Übergänge 4a der ersten Gruppe a wie in Fig. 4a abgebildet ausgeführt sein. Weiterhin können die Übergänge 4b der zweiten Gruppe b wie in Fig. 4b abgebildet ausgeführt sein. Bei der Ausführungsform gemäß Fig. 3 sind somit gleiche Übergänge 4a links und rechts einer ersten konkaven Zylinderlinse 5 und gleiche Übergänge 4b links und rechts einer zu der ersten konkaven Zylinderlinse 5 benachbarten zweiten konkaven Zylinderlinse 5 angeordnet.

Es zeigt sich, dass die Übergänge 4b in Ausbreitungsrichtung des zu homogenisierenden Lichts ausgedehnter sind als die Übergänge 4a. Dadurch verlaufen Teilstrahlen des zu homogenisierenden Lichts, die beispielsweise von unten nach oben durch in Fig. 3 durch die Übergänge 4b hindurch treten, über eine längere Wegstrecke innerhalb des Substrates 1 als Teilstrahlen, die durch die Übergänge 4a hindurch treten. Aufgrund des größeren Brechungsindex des Substrates, das beispielsweise aus Glas besteht, im Vergleich zu der umgebenden Luft ergibt sich ein optischer Gangunterschied von Teilstrahlen, die durch die Übergänge 4b hindurch getreten sind, zu Teilstrahlen, die durch die Übergänge 4a hindurch getreten sind. Dieser Gangunterschied kann bei einer bevorzugten Ausführungsform etwa einer halben Wellenlänge oder einem ungradzahligen Vielfachen einer halben Wellenlänge des zu homogenisierenden Lichts entsprechen. Dadurch können Interferenzeffekte des homogenisierten Lichts verringert werden. Andere Gangunterschiede sind ebenfalls möglich und wirksam.

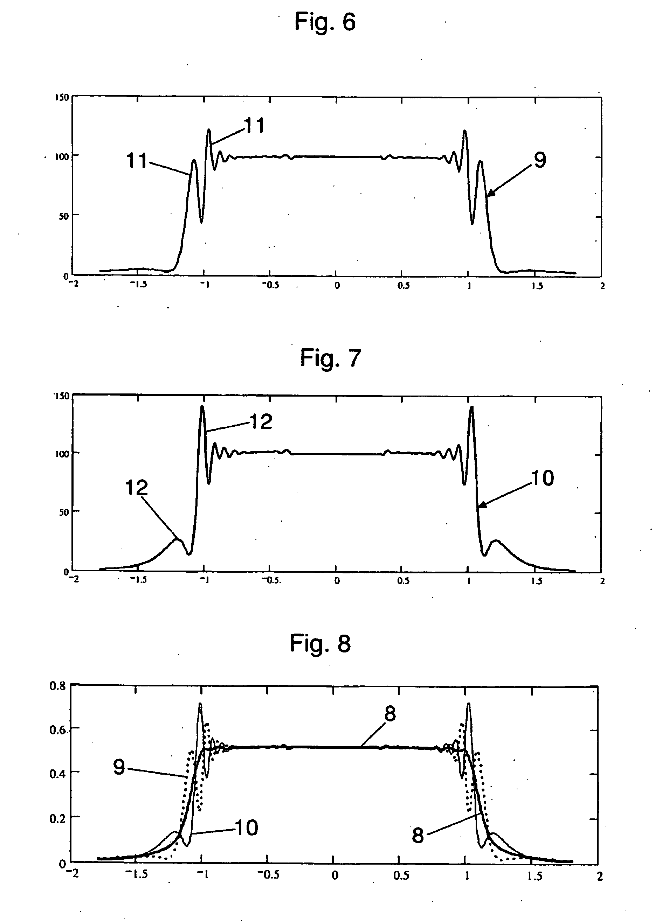

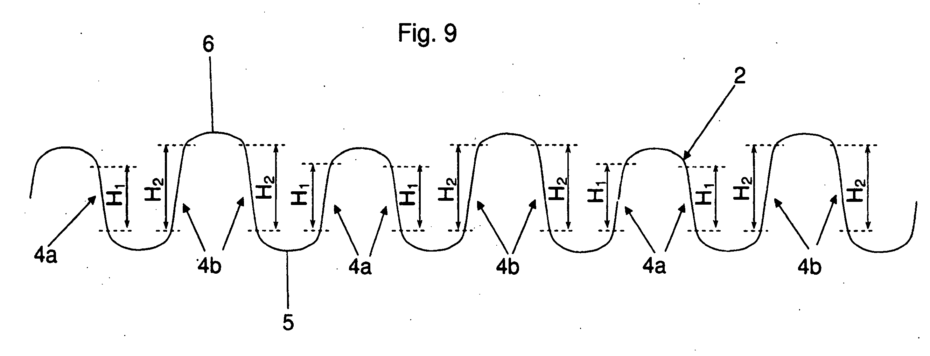

Fig. 5 zeigt eine Intensitätsverteilung von Licht 8, das durch eine Vorrichtung gemäß Fig. 3 oder Fig. 9 hindurch getreten ist. Die aus dem Stand der Technik bekannten Intensitätsspitzen tauchen hier nicht auf. Fig. 6 bis Fig. 8 zeigen, wie durch Überlagerung des durch die Gruppe a hindurch getretenen Lichts 9 mit dem durch die Gruppe b hindurch getretenen Licht 10 die aus Fig. 5 und Fig. 8 ersichtliche Intensitätsverteilung des homogenisierten Lichts 8 entsteht. Sowohl bei dem Hindurchtritt durch die Gruppe a (siehe Fig. 6) als auch bei dem Hindurchtritt durch die Gruppe b (siehe Fig. 7) entstehen Intensitätsspitzen 11, 12, die sich jedoch bei der Überlagerung (siehe Fig. 8) weg interferieren beziehungsweise derart überlagern, dass eine homogene Intensitätsverteilung entsteht.

Aus Fig. 9 ist eine Ausführungsform ersichtlich, bei der gleiche Übergänge 4a beziehungsweise 4b nicht links und rechts einer konkaven Zylinderlinse 5 sondern links und rechts einer konvexen Zylinderlinse 6 angeordnet sind. Dies ist für die Funktion der Vorrichtung nicht von Bedeutung. Wesentlich ist lediglich, dass eine etwa gleiche Anzahl von der Übergängen 4a zwischen den konkaven und den konvexen Zylinderlinsen 5, 6 gemäß der ersten Ausführungsform und von Übergängen 4b gemäß der zweiten Ausführungsform auf der optisch funktionale Fläche 2 vorgesehen sind.

In Fig. 9 ist verdeutlicht, dass die die Ausdehnung $H_2$ des Übergangs 4b zwischen den konkaven und den konvexen Zylinderlinsen 5, 6 gemäß der zweiten Ausführungsform in Ausbreitungsrichtung des zu homogenisierenden Lichts größer ist als die Ausdehnung $H_1$ des Übergangs 4a gemäß der ersten Ausführungsform. Dabei kann bei einer Wellenlänge $\lambda$ des zu homogenisierenden Lichts und bei einem Brechungsindex n des Substrats 1, in dem die optisch funktionale Grenzfläche 2 ausgebildet ist, die Differenz ΔH so gewählt werden, dass sie folgender Formel entspricht:

$$\Delta H = H_2 - H_1 = \frac{\lambda / 2}{n - 1}.$$

Wenn ΔH dieser Formel entspricht, sind, insbesondere bei kleinen von der Flächennormalen auf der Fläche 2 gemessenen Austrittswinkeln des zu homogenisierenden Lichts, die Intensitätsverteilungen gemäß Fig. 6 und Fig. 7 gerade so gegeneinander verschoben, dass die Intensitätsspitzen 11, 12 sich bei der Überlagerung (siehe Fig. 8) weg interferieren beziehungsweise derart überlagern, dass eine homogene Intensitätsverteilung entsteht.

**Patentansprüche**

1.   Vorrichtung zur Homogenisierung von Licht, umfassend

  - mindestens eine optisch funktionale Fläche (2), durch die zu homogenisierendes Licht hindurch treten kann;
  - eine Mehrzahl von konkaven und konvexen Zylinderlinsen (5, 6), die abwechselnd nebeneinander auf der mindestens einen optisch funktionalen Fläche (2) angeordnet sind;
  - mindestens eine erste Ausführungsform von Übergängen (4a) zwischen den konkaven und den konvexen Zylinderlinsen (5, 6) und mindestens eine zweite, zu der mindestens einen ersten unterschiedliche Ausführungsform von Übergängen (4b) zwischen den konkaven und den konvexen Zylinderlinsen (5, 6);

  **dadurch gekennzeichnet, dass**

  - die Übergänge (4a, 4b) zwischen den konkaven und den konvexen Zylinderlinsen (5, 6) derart gestaltet sind, dass Teilstrahlen des zu homogenisierenden Lichts, die durch unterschiedliche Ausführungsformen der Übergänge (4a, 4b) zwischen den konkaven und den konvexen Zylinderlinsen (5, 6) hindurch getreten sind, einen optischen Gangunterschied zueinander aufweisen, der zur Verminderung von Interferenzeffekten in dem homogenisierten Licht (8) beiträgt.

2.   Vorrichtung nach Anspruch 1, **dadurch gekennzeichnet, dass** auf der mindestens einen optisch funktionalen Fläche (2) die erste und die zweite Ausführungsform der Übergänge (4a, 4b) miteinander abwechseln.

3.   Vorrichtung nach einem der Ansprüche 1 oder 2, **dadurch gekennzeichnet, dass** der Übergang (4b) zwischen den konkaven und den konvexen Zylinderlinsen (5, 6) gemäß der zweiten Ausführungsform steiler ist der Übergang (4a) gemäß der ersten Ausführungsform.

4.   Vorrichtung nach einem der Ansprüche 1 bis 3, **dadurch gekennzeichnet, dass** der Übergang (4b) zwischen den konkaven und den konvexen Zylinderlinsen (5, 6) gemäß der zweiten Ausführungsform eine größere Abweichung von einer sinusähnlichen Form aufweist als der Übergang (4a) gemäß der ersten Ausführungsform.

5.   Vorrichtung nach einem der Ansprüche 1 bis 4, **dadurch gekennzeichnet, dass** die Ausdehnung ($H_2$) des Übergangs (4b) zwischen den konkaven und den konvexen Zylinderlinsen (5, 6) gemäß der zweiten Ausführungsform in Ausbreitungsrichtung des zu homogenisierenden Lichts größer ist als die Ausdehnung ($H_1$) des Übergangs (4a) gemäß der ersten Ausführungsform.

6.   Vorrichtung nach Anspruch 5, **dadurch gekennzeichnet, dass** die Differenz (ΔH) zwischen der Ausdehnung ($H_2$) des Übergangs (4b) gemäß der zweiten Ausführungsform in Ausbreitungsrichtung des zu homogenisierenden Lichts und der Ausdehnung ($H_1$) des Übergangs (4a) gemäß der ersten Ausführungsform bei einer Wellenlänge λ des zu homogenisierenden Lichts nach der Formel

$$\Delta H = H_2 - H_1 = \frac{\lambda / 2}{n - 1}$$

gewählt ist, wobei n der Brechungsindex des Materials ist, in dem die optisch funktionale Grenzfläche (2) ausgebildet ist.

7.   Vorrichtung nach einem der Ansprüche 1 bis 6, **dadurch gekennzeichnet, dass** die Übergänge (4a, 4b) zwischen den konkaven und den konvexen Zylinderlinsen (5, 6) so gestaltet sind, dass sowohl der Übergang (4b) gemäß der zweiten Ausführungsform als auch der Übergang (4a) gemäß der ersten Ausführungsform Intensitätsspitzen (11, 12) im Fernfeld des zu homogenisierenden Lichts erzeugen können, wobei diese Intensitätsspitzen (11, 12) jedoch in der Intensitätsverteilung des Fernfelds gegeneinander verschoben sind, so dass eine homogene Intensitätsverteilung entstehen kann.

8.   Vorrichtung nach einem der Ansprüche 1 bis 7, **dadurch gekennzeichnet, dass** die Übergänge (4a, 4b) zwischen den konkaven und den konvexen Zylinderlinsen (5, 6) derart gestaltet sind, dass der optische Gangunterschied von Teilstrahlen des zu homogenisierenden Lichts, die durch unterschiedliche Ausführungsformen der Übergänge (4a, 4b) zwischen den konkaven und den konvexen Zylinderlinsen (5, 6) hindurch getreten sind, etwa einer halben Wellenlänge oder einem ungradzahligen Vielfachen einer halben Wellenlänge des zu homogenisierenden Lichts entspricht.

## Claims

1. Device for homogenizing light, comprising

   - at least one optically functional surface (2), through which light to be homogenized can pass;
   - a plurality of concave and convex cylindrical lenses (5, 6) which are arranged on the at least one optically functional surface (2) in an alternating fashion, one next to another;
   - at least one first embodiment of transitions (4a) between the concave and convex cylindrical lenses (5, 6) and at least one second embodiment of transitions (4b) between the concave and convex cylindrical lenses (5, 6) which is different from the at least one first embodiment;

   **characterized in that**

   - the transitions (4a, 4b) between the concave and convex cylindrical lenses (5, 6) are designed such that partial beams of the light to be homogenized, which have passed through different embodiments of the transitions (4a, 4b) between the concave and convex cylindrical lenses (5, 6), have an optical path difference from one another which contributes to decreasing interference effects in the homogenized light (8).

2. Device according to Claim 1, **characterized in that** the first and second embodiment of the transitions (4a, 4b) alternate with one another on the at least one optically functional surface (2).

3. Device according to one of Claims 1 or 2, **characterized in that** the transition (4b) between the concave and convex cylindrical lenses (5, 6) in accordance with the second embodiment is steeper than the transition (4a) in accordance with the first embodiment.

4. Device according to one of Claims 1 to 3, **characterized in that** the transition (4b) between the concave and convex cylindrical lenses (5, 6) in accordance with the second embodiment has a larger deviation from a sinusoidal form than the transition (4a) in accordance with the first embodiment.

5. Device according to one of Claims 1 to 4, **characterized in that** in the direction of propagation of the light to be homogenized, the extent ($H_2$) of the transition (4b) between the concave and convex cylindrical lenses (5, 6) in accordance with the second embodiment is greater than the extent ($H_1$) of the transition (4a) in accordance with the first embodiment.

6. Device according to Claim 5, **characterized in that** in the direction of propagation of the light to be homogenized, the difference ($\Delta H$) between the extent ($H_2$) of the transition (4b) in accordance with the second embodiment and the extent ($H_1$) of the transition (4a) in accordance with the first embodiment at a wavelength $\lambda$ of the light to be homogenized is chosen in accordance with the formula

$$\Delta H = H_2 - H_1 = \frac{\lambda/2}{n-1},$$

   wherein n is the refractive index of the material in which the optically functional interface (2) is designed.

7. Device according to one of Claims 1 to 6, **characterized in that** the transitions (4a, 4b) between the concave and convex cylindrical lenses (5, 6) are designed such that both the transition (4b) in accordance with the second embodiment and the transition (4a) in accordance with the first embodiment can generate intensity peaks (11, 12) in the far field of the light to be homogenized, wherein, however, these intensity peaks (11, 12) are displaced with respect to one another in the intensity distribution of the far field, so that a homogeneous intensity distribution can be created.

8. Device according to one of Claims 1 to 7, **characterized in that** the transitions (4a, 4b) between the concave and convex cylindrical lenses (5, 6) are designed such that the optical path difference of partial beams of the light to be homogenized, which have passed through different embodiments of the transitions (4a, 4b) between the concave and convex cylindrical lenses (5, 6), corresponds to approximately one half wavelength or an odd multiple of a half wavelength of the light to be homogenized.

**Revendications**

1. Dispositif d'homogénéisation de la lumière, comprenant :

- au moins une surface optiquement fonctionnelle (2) à travers laquelle peut passer la lumière à homogénéiser ;
- une pluralité de lentilles cylindriques concaves et convexes (5, 6) qui sont disposées de manière alternée les unes à côté des autres sur l'au moins une surface optiquement fonctionnelle (2) ;
- au moins une première forme de réalisation de transitions (4a) entre les lentilles cylindriques concaves et convexes (5, 6) et au moins une seconde forme de réalisation différente de l'au moins une première forme de réalisation de transitions (4b) entre les lentilles cylindriques concaves et convexes (5, 6) ;

**caractérisé en ce que**

- les transitions (4a, 4b) entre les lentilles cylindriques concaves et convexes (5, 6) sont conçues de telle manière que des faisceaux partiels de la lumière à homogénéiser, qui sont passés à travers des formes de réalisation différentes des transitions (4a, 4b) entre les lentilles cylindriques concaves et convexes (5, 6), présentent les uns par rapport aux autres une différence de chemin optique qui contribue à réduire des effets interférences dans la lumière homogénéisée (8).

2. Dispositif selon la revendication 1, **caractérisé en ce que** les première et seconde formes de réalisation des transitions (4a, 4b) alternent l'une avec l'autre sur l'au moins une surface optiquement fonctionnelle (2).

3. Dispositif selon l'une quelconque des revendications 1 ou 2, **caractérisé en ce que** la transition (4b) entre les lentilles cylindriques concaves et convexes (5, 6) conforme à la seconde forme de réalisation est plus prononcée que la transition (4a) conforme à la première forme de réalisation.

4. Dispositif selon l'une quelconque des revendications 1 à 3, **caractérisé en ce que** la transition (4b) entre les lentilles cylindriques concaves et convexes (5, 6) conforme à la seconde forme de réalisation présente un écart plus important par rapport à une forme sinusoïdale que la transition (4a) conforme à la première forme de réalisation.

5. Dispositif selon l'une quelconque des revendications 1 à 4, **caractérisé en ce que** l'extension ($H_2$) de la transition (4b) entre les lentilles cylindriques concaves et convexes (5, 6) conforme à la seconde forme de réalisation est plus importante dans la direction de propagation de la lumière à homogénéiser que l'extension ($H_1$) de la transition (4a) conforme à la première forme de réalisation.

6. Dispositif selon la revendication 5, **caractérisé en ce que** la différence ($\Delta H$) entre l'extension ($H_2$) de la transition (4b) conforme à la seconde forme de réalisation dans la direction de propagation de la lumière à homogénéiser et l'extension ($H_1$) de la transition (4a) conforme à la première forme de réalisation est sélectionnée, pour une longueur d'onde $\lambda$ de la lumière à homogénéiser, conformément à la formule :

$$\Delta H \;=\; H_2 \;-\; H_1 \;=\; \frac{\lambda/2}{n-1}$$

où n est l'indice de réfraction du matériau dont est constituée la surface de séparation optiquement fonctionnelle (2).

7. Dispositif selon l'une quelconque des revendications 1 à 6, **caractérisé en ce que** les transitions (4a, 4b) entre les lentilles cylindriques concaves et convexes (5, 6) sont conçues de telle manière que la transition (4b) conforme à la seconde forme de réalisation et la transition (4a) conforme à la première forme de réalisation puissent toutes deux générer des pics d'intensité (11, 12) dans le champ lointain de la lumière à homogénéiser, ces pics d'intensité (11, 12) pouvant cependant être décalés l'un par rapport à l'autre dans la distribution d'intensité du champ lointain de telle manière qu'il puisse se produire une répartition d'intensité homogène.

8. Dispositif selon l'une quelconque des revendications 1 à 7, **caractérisé en ce que** les transitions (4a, 4b) entre les lentilles cylindriques concaves et convexes (5, 6) sont conçues de telle manière que la différence de chemin optique des faisceaux partiels de la lumière à homogénéiser qui sont passés à travers des formes de réalisation différentes des transitions (4a, 4b) entre les lentilles cylindriques concaves et convexes (5, 6) corresponde approximativement à une demi-longueur d'onde ou à un multiple impair d'une demi-longueur d'onde de la lumière à homogénéiser.

## Fig. 1

## Fig. 2

## Fig. 3

## Fig. 4a

## Fig. 4b

## Fig. 5

## Fig. 6

## Fig. 7

## Fig. 8

EP 1 943 557 B1

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6239913 B1
- EP 1489438 A